# EUROPÄISCHE PATENTSCHRIFT

(11) **EP 0 982 526 B1**
(45) Veröffentlichungstag und Bekanntmachung des Hinweises auf die Patenterteilung: **31.07.2002**
(21) Anmeldenummer: 98115866.0
(22) Anmeldetag: 22.08.1998
(51) Int. Cl.: F16L 37/088

(54) **Hochdruck-Verbindervorrichtung**
High-pressure connector
Connecteur pour haute pression

(43) Veröffentlichungstag der Anmeldung: 01.03.2000
(73) Patentinhaber: Voswinkel KG, 58540 Meinerzhagen (DE)
(72) Erfinder: Weiland, Georg, 58540 Meinerzhagen (DE)
(74) Vertreter: Ludewig, Karlheinrich, Dipl.-Ing.

(56) Entgegenhaltungen:
- WO-A-96/35906
- FR-A- 2 179 471
- GB-A- 926 215
- US-A- 5 226 682
- US-A- 5 553 895

## Beschreibung

Die Erfindung bezieht sich auf eine Verbindervorrichtung insbesondere für Hydraulikleitungen. Derartige Leitungen und Verbindervorrichtungen werden vielfach, z. B. in der Automobilindustrie im Bereich der Servolenkungen und Bremssysteme, eingesetzt. Dabei sind verschiedene Aspekte zu beachten:
1. Die Verbindervorrichtungen sollten selbstsichernd sein, d. h. eine Druckbeaufschlagung darf nicht zu einem Lösen der Verbindungselemente führen, sondern im Gegenteil eine sichere Halterung unterstützen.
2.) Aus Kostengründen bei der Produktion sollte die Montage extrem einfach, im Idealfach durch einfaches Zusammenstecken der einzelnen Verbindungselemente erfolgen können.
3. Die Demontage sollte auf ebenso einfache Weise erfolgen können. Dies ist insbesondere wichtig bei schwer zugänglichen Verbindungsstellen, die aufgrund der Raumeinteilung mit Werkzeugen oder auch nur mit zwei Händen nicht erreichbar sind. Idealerweise sollte daher die Verbindung auch einhändig lösbar sein.

Eine solche Vorrichtung der im Oberbegriff von Anspruch 1 genannten Art wird in der Druckschrift WO 96/35906 offenbart. Als Sperrmechanismus dient hier eine Kombination von mindestens drei Ringsegmenten, die in einer seitlichen Ausbuchtung der Hauptkammer der Matrize untergebracht sind. Sie sind mit einem Federelement ausgestattet, das sie bereichsweise in die Hauptkammer hineinkippen läßt. Beim Einführen der Patrize werden die Sperrelemente mit Hilfe des als Spreizkragen wirkenden vorderen Endes der Patrize gegen die Federkraft vollständig in die seitlichen Ausbuchtungen der Hauptkammer gepreßt. Nach Passieren des Spreizkragens schnappen die Sperrelemente, getrieben von der Federkraft wieder in Richtung Hauptkammermitte und verriegeln der mit Druck oder Zug beaufschlagten Patrize den Rückweg. Zum Lösen der Verbindung wird die Patrize zunächst tiefer in die Matrize eingeführt, wobei ein zwischen dem Spreizkragen und einem Anschlagflansch axial beweglich angeordneter Ring die Sperrelemente wieder entgegen der Federkraft in ihre Ausbuchtungen zurückdrängt. Beim anschließenden Ausführen der Patrize verschiebt sich der bewegliche Ring in Richtung Spreizkragen und bildet somit eine Verlängerung desselben, so daß die Patrize ausgeführt werden kann, ohne daß der Sperrmechanismus wieder in die Sperrstellung überführt werden könnte.

Nachteilig an diesem Stand der Technik ist die komplizierte Fertigung der Verbinderelemente, insbesondere der Matrize mit dem Sperrmechanismus. Die Sperrelemente, die selbst eine komplexe und schwer zu bearbeitende Form aufweisen, müssen mittels einer eigenen Vorrichtung in die Ausbuchtungen an der Hauptkammer der Matrize eingeführt werden. Eine derartige Vorrichtung stellt einen weiteren Teil der in der besagten Druckschrift offenbarten Erfindung dar.

Als weiterer Nachteil muß erwähnt werden, daß Lagerung und Transport der zusammengesetzten Matrizen äußerst schwierig ist, da die Sperrelemente ständig Gefahr laufen, ohne haltende Patrize aus ihren Ausbuchtungen zu fallen.

Aus dem Dokument FR 2 179 471 ist des weiteren eine Vorrichtung bekannt, die aus einer Patrize und einer Matrize als Verbindungselemente besteht. Das Verbinden der beiden Elemente erfolgt durch axiales Einführen der Patrize in die Hauptkammer der Matrize, wobei der Spreizkragen der Patrize einen Sprengring dehnt, so dass dieser in eine Ausbuchtung der Matrize ausweicht. Nach hinreichend tiefem Einführen der Patrize, d.h. nach Passieren des Spreizkragens, entspannt sich der Sprengring wieder und rastet in eine Nut an der Patrize ein. In dieser Nut findet neben dem Sprengring noch ein axial verschieblicher Ring Platz. Dieser Ring liegt beim Einschieben der Patrize im hinteren Bereich der Nut an. Wird die Patrize nach dem Einrasten des Sprengrings weiter in Einschubrichtung bewegt, so schiebt sich dieser Ring unter den Sprengring. Bei Zug in Gegenrichtung wird aufgrund der Federkraft des Sprengrings der axial verschiebliche Ring in der Nut verschoben und kommt am anderen Nutende zur Anlage. Dadurch wird ein Herausziehen der Patrize ohne Schwierigkeit möglich. Dieses Verbindungssystem wird jedoch mit der Zeit unzuverlässig. Beim Nachlassen der Federkraft des Sprengrings oder der leichten Verschieblichkeit des Ringes wird ein Lösen der Verbindung schwierig, da der Sprengring wieder in die Nut an der Patrize einrasten kann.

Aufgabe der vorliegenden Erfindung ist es, eine Verbindungsvorrichtung der im Oberbegriff des Anspruchs 1 genannten Art zur Verfügung zu stellen, die die genannten Nachteile überwindet und insbesondere leicht und kostengünstig zu fertigen ist, eine sichere Halterung der zu verbindenden Hydraulikleitungen gewährleistet und eine einfache, einhändige Handhabung sowohl bei der Montage als auch bei der Demontage bietet.

Diese Aufgabe wird erfindungsgemäß durch die Merkmale des kennzeichnenden Teils von Anspruch 1 gelöst. Diesen kommt folgende Bedeutung zu:

Die Hauptkammer der Matrize weist mindestens zwei in axialer Richtung hintereinander liegende Ausbuchtungen auf, die vorzugsweise um den gesamten Umfang der Hauptkammer umlaufen. Dabei ist die als Sperrkammer bezeichnete Ausbuchtung, die der Einführöffnung der Matrize zunächst gelegen ist, weniger tief in das umgebende Material eingearbeitet als die unmittelbar und ohne Trennwand folgende, als Ausweichkammer bezeichnete Ausbuchtung. Ein Sperrelement, vorzugsweise ein Sprengring, der in entspanntem Zustand günstigerweise einen Außendurchmesser aufweist, der größer als die Einführöffnung der Matrize bzw. größer als der Innendurchmesser der Hauptkammer, jedoch kleiner als der Außendurchmesser der beiden Kammern ist, wird beim Einführen der Patrize in die Tiefe der Ausweichkammer hinein gedehnt und nach Passieren des Spreizkragens bei Druckbeaufschlagung oder Zug von der hinteren Flanke des Spreizkragens in die Sperrkammer überführt. Diese ist so ausgestaltet, daß ein Spreizen des Ringes in dieser Stellung nicht möglich ist. Beim Lösen der Verbindung, das zunächst durch tieferes Einführen der Patrize eingeleitet wird, wird das Sperrelement zunächst wieder in die Ausweichkammer überführt, wo es mit Hilfe des speziell ausgestalteten, zwischen Spreizkragen und Anschlagflansch axial beweglichen Ringes gehalten wird, so daß beim Ausführen der Patrize ein erneutes Überführen des Sperrelementes in die Sperrkammer verunmöglicht wird.

Weitere Merkmale und Vorteile der Erfindung ergeben sich aus den Unteransprüchen, der speziellen Beschreibung und den Figuren.

Es zeigen
- Fig. 1: Teilansichten der entkoppelten Matrize und Patrize.
- Fig. 2: Phase 1 des Einführvorganges (Sperrelement wird von der Vorderflanke des Spreizkragens in die Ausweichkammer gedehnt),
- Fig. 3: Phase 2 des Einführvorganges (Sprengring ist durch Spreizplateau maximal in die Ausweichkammer gedehnt,
- Fig. 4: Phase 3 des Einführvorganges (Sperrelement entspannt sich hinter Spreizkragen),
- Fig. 5: Phase 4 des Einführvorganges (Sperrelement wird nach Druckbeaufschlagung in Sperrkammer überführt),
- Fig. 6: Phase 1 des Lösevorganges (beim tieferen Einführen der Patrize wird Sperrelement zurück in Ausweichkammer überführt),
- Fig. 7: Phase 2 des Lösevorganges (Sperrelement wird durch Anlaufschräge des axial beweglichen Ringes in Ausweichkammer gespreizt),
- Fig. 8: Phase 3 des Lösevorganges (Sperrelement schnappt in Nut des axial beweglichen Ringes ein),
- Fig. 9: Phase 4 des Lösevorganges (beim Ausführen der Patrize wird Sperrelement in Ausweichkammer gehalten),
- Fig. 10: Phase 5 des Lösevorganges (Spreizkragen dehnt erneut Sperrelement tiefer in Ausweichkammer),
- Fig. 11: Phase 6 des Ausführvorganges (Patrize wird an Sperrelement vorbei aus der Matrize ausgeführt).

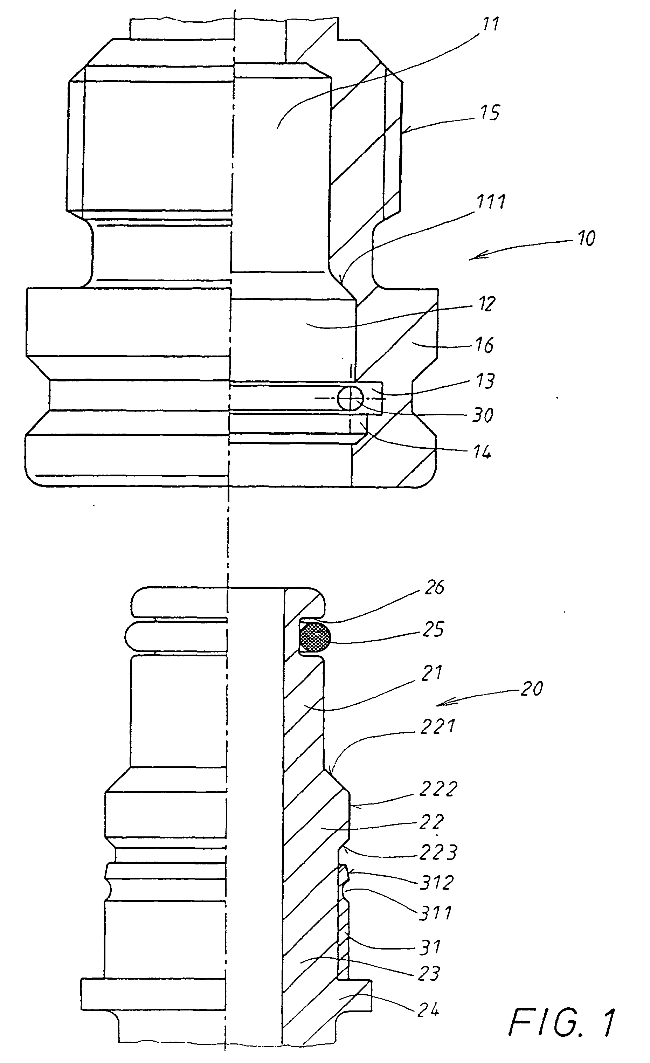

Die Figuren stellen die einzelnen Phasen des Koppelns und Lösens der beiden Verbindungselemente einer besonders vorteilhaften Ausführungsform der erfindungsgemäßen Verbindervorrichtung dar. Die Einzelteile lassen sich anhand von Fig. 1 erläutern. Die Verbindungselemente stellen ein System aus einer Matrize 10 und einer in diese eingreifenden Patrize 20 dar. In einer besonders vorteilhaften Ausführungsform ist die Matrize 10 als Festhälfte ausgeführt und weist ein Außengewinde 14 auf, mit welchem sie etwa in einen Ventilblock einschraubbar ist. Zum Ansetzen eines Werkzeuges ist ein Sechskantkragen 16 vorgesehen. Im Inneren der Matrize sind mehrere radial symmetrische Kammern angeordnet, die zum Teil mit entsprechenden Partien der Patrize 20 korrespondieren. Die Vorkammer 11 dient bei vorschriftsmäßiger Einkopplung der Aufnahme des vorderen, zylindrischen Teils 21 der Patrize 20. Vorteilhafterweise sind in diesem Bereich Dichtmittel angebracht. In der in den Zeichnungen gezeigten Ausführung wird die Dichtung durch einen O-Ring 25 gewährleistet, der in einer geeignet ausgeformten Nut 26 im vorderen, zylindrischen Teil 21 der Patrize 20 festgelegt ist. Ebenso wäre ein Sitz des O-Rings in einer Nut in der zylindrischen Vorkammer 11 der Matrize 10, die in Länge und Durchmesser mit dem vorderen, zylindrischen Teil 21 der Patrize 20 korrespondiert, denkbar. Auch mehrfache, andere oder an anderen Stellen angebrachte Dichtmittel sind im Rahmen der hier offenbarten Erfindung möglich.

An die zylindrische Vorkammer 11 schließt sich im Inneren der Matrize 10 eine Hauptkammer 12 an. Diese korrespondiert in ihrem Durchmesser mit dem maximalen Durchmesser des Spreizkragens 22 der Patrize 20. Der Spreizkragen 22 läßt sich in drei Abschnitte einteilen, die auch funktionelle Bedeutung haben: die vordere Spreizflanke 221, das Spreizplateau 222 und die hintere Spreizflanke 223. Günstigerweise entspricht die Steigung der vorderen Spreizflanke 221 der Übergangsflanke 111, die in der Matrize 10 die Vorkammer 11 und die Hauptkammer 12 miteinander verbindet.

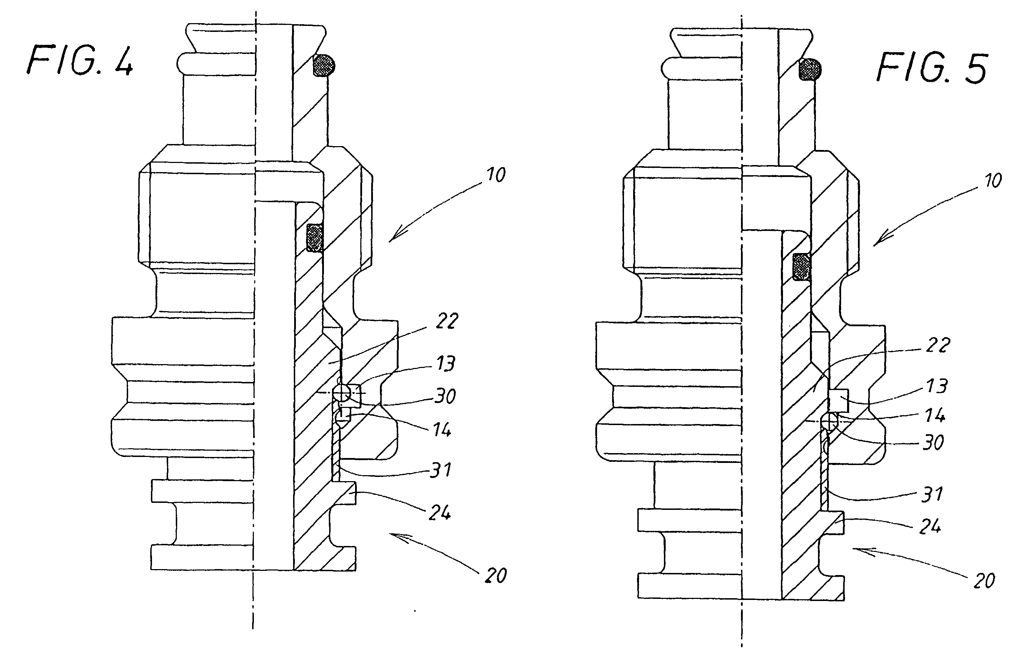

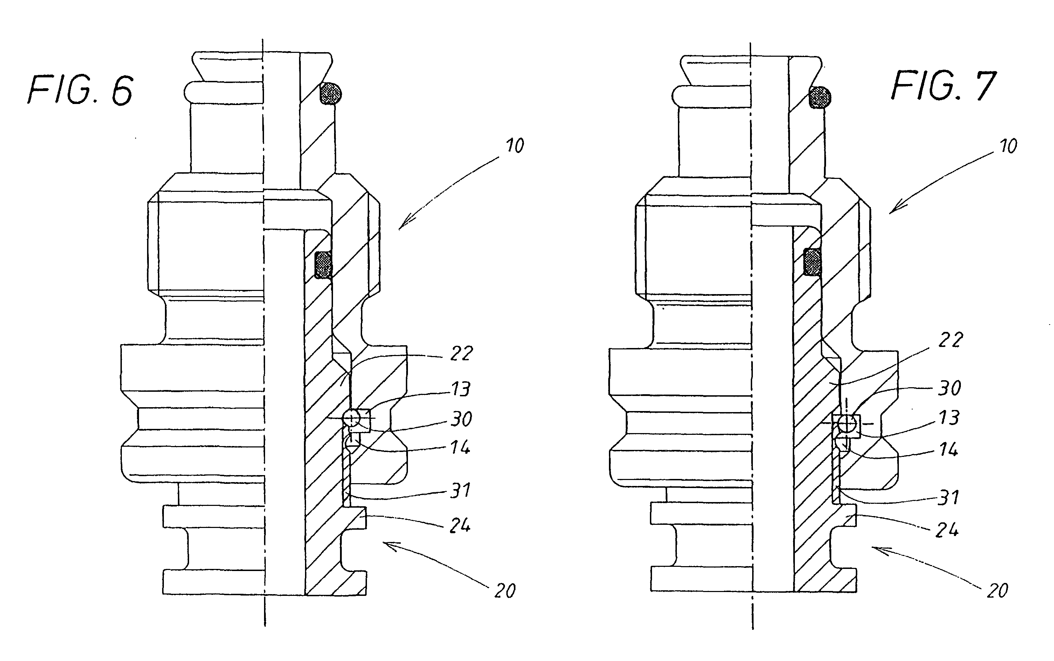

Außerdem weist die Matrize 10 als radiale Erweiterung der Hauptkammer 12 eine Ausweichkammer 13 sowie eine Sperrkammer 14 auf. Die Ausweichkammer 13 ist vorteilhafterweise so bemessen, daß ihr Radius denjenigen der Hauptkammer 12 um mindestens den Durchmesser eines als Sperrmittel dienenden Sprengrings 30 übertrifft. Auch die Breite der Ausweichkammer 13 ist günstigerweise um wenig größer gewählt als der Durchmesser des Sprengrings 30. Die an die Ausweichkammer 13 grenzende Sperrkammer 14 weist bei ähnlicher Breite einen geringeren Durchmesser auf als die Ausweichkammer 13. Zur Bestimmung ihres günstigsten Durchmessers muß derjenige des hinteren, zylindrischen Teils 23 der Patrize 20 betrachtet werden. Der hintere, zylindrische Teil 23 schließt sich an die hintere Spreizflanke 223 des Spreizkragens 22 an. Er wird begrenzt von einem Anschlagflansch 24. Wie etwa aus dem Vergleich der Fig. 3 und 5 ersichtlich, sollten die Abmessungen so gewählt sein, daß der radiale Freiraum zwischen hinterem, zylindrischen Teil 23 der Patrize 20 und der äußeren, radialen Abschlußwand der Sperrkammer 14 etwa der Wandstärke des Sprengrings 30 entspricht.

Der hintere zylindrische Teil 23 der Patrize 20 wird von einem axial beweglichen Ring 31 umgriffen. Der Ring 31 ist zwischen hinterer Spreizflanke 223 und Anschlagflansch 24 verschiebbar. Sein Außendurchmesser sollte so bemessen sein, daß er in etwa dem Innendurchmesser der Hauptkammer 12 der Matrize 10 bzw. dem Außendurchmesser des Spreizplateaus 222 der Patrize 20 entspricht. Sein Innendurchmesser ist günstigerweise so gewählt, daß ein möglichst spiel- und reibungsarmes Gleiten auf dem hinteren, zylindrischen Teil 23 der Patrize 20 möglich ist. In der besonders günstigen Ausführungsform, die in den Zeichnungen gezeigt ist, weist der Ring 31 in seinem vorderen Teil eine Nut 311 auf, deren Krümmungsradius vorteilhafterweise auf die Form des Sprengrings 30 abgestimmt ist. Günstigerweise ist der vordere, sich an die Nut 311 anschließende Teil des Rings 31 mit einer Anlaufschräge 312 versehen. Die vordere Kante des Rings 31 weist vorzugsweise eine an die hintere Spreizflanke 223 angepaßte Form auf.

Die besondere Bedeutung der Erfindung offenbart sich im Zusammenspiel der oben beschriebenen Einzelteile beim Koppel- und Lösevorgang. Dieses soll im folgenden beschrieben werden.

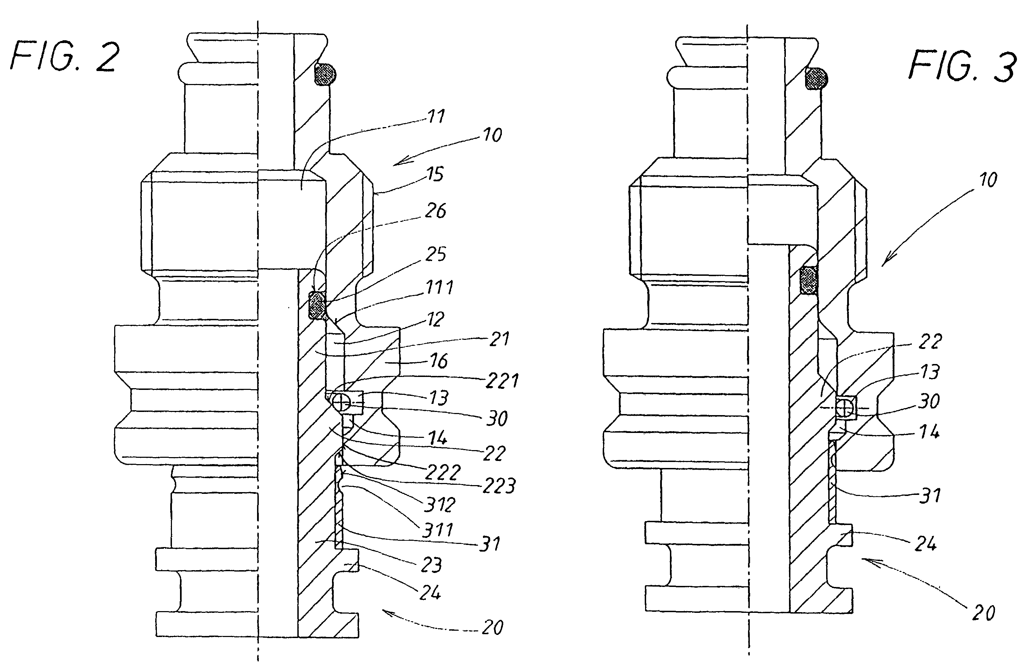

Figur 2 zeigt, ausgehend von der Konstellation in Figur 1, die erste Phase des Koppelvorgangs. Beim Einführen der Patrize 20 in die Matrize 10 wird der Sprengring 30 von der vorderen Spreizflanke 221 geweitet. Die Abstimmung des Innendurchmessers der Hauptkammer 12 und des Außendurchmessers des Sprengrings 30 erlauben dabei kein Verschieben des Sprengrings über die Vorderkante der Ausweichkammer 13 hinaus. Gleichzeitig bietet die Ausweichkammer 13 dem Sprengring 30 jedoch ausreichend Raum zur Ausdehnung. Die maximale Ausdehnung des Sprengrings ist, wie in Figur 3 gezeigt, erreicht, wenn der Sprengring 30 am Spreizplateau 222 anliegt. Weiteres Einführen der Patrize 20 in die Matrize 10 läßt den Sprengring 30 die hintere Spreizflanke 223 hinabgleiten. Für den Monteur ist dieser Zeitpunkt aufgrund der Federkraft des Sprengrings 30 durch ein deutliches Einrasten feststellbar. Der Einführvorgang muß zu diesem Zeitpunkt beendet werden. Zur besseren Kenntlichmachung dieses Zeitpunktes bzw. dieser relativen Stellung von Patrize 20 und Matrize 10 sind weitere Markierungen visueller oder mechanischer Art denkbar.

Manueller Zug an der Patrize 20 oder Druckbeaufschlagung der Leitung leiten ansatzweise einen Ausführvorgang ein. Der Sprengring 30 wird dabei zunächst von der hinteren Spreizflanke 223 in die Sperrkammer 14 hinein überführt. Beim Anschlag des Sprengrings 30 an der hinteren Abschlußkante der Sperrkammer 14 würde ein weiterer Dehnungsprozeß des Sprengrings 30 einsetzen. Allerdings bietet die Sperrkammer 14 im Gegensatz zur Ausweichkammer 13 hierfür keinen Raum. Der Sprengring 30 wirkt somit als Sperrelement und verhindert ein Ausführen der Patrize 20 aus der Matrize 10. Eine derartige Kupplung ist geeignet, auch hohe Drücke (> 100 bar), wie sie im Bereich der Servolenkungen und Bremssysteme bei Kraftfahrzeugen auftreten, auszuhalten. Für die notwendige Dichtung des Systems sorgen die Dichtmittel, die im gezeigten Ausführungsbeispiel als O-Ring 25 in einer Nut 26 im vorderen, zylindrischen Teil 21 der Patrize 20 ausgeführt sind. Andere Ausführungsformen, wie mehrfache Dichtungen oder Einsetzen des O-Rings in eine Nut in der Matrize, sind im Rahmen der Erfindung durchaus denkbar.

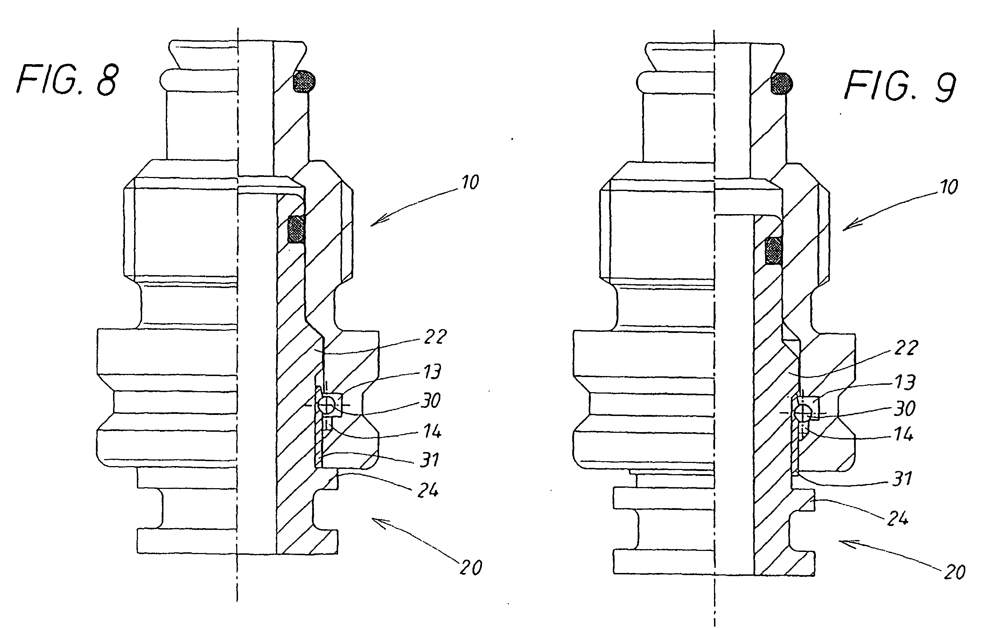

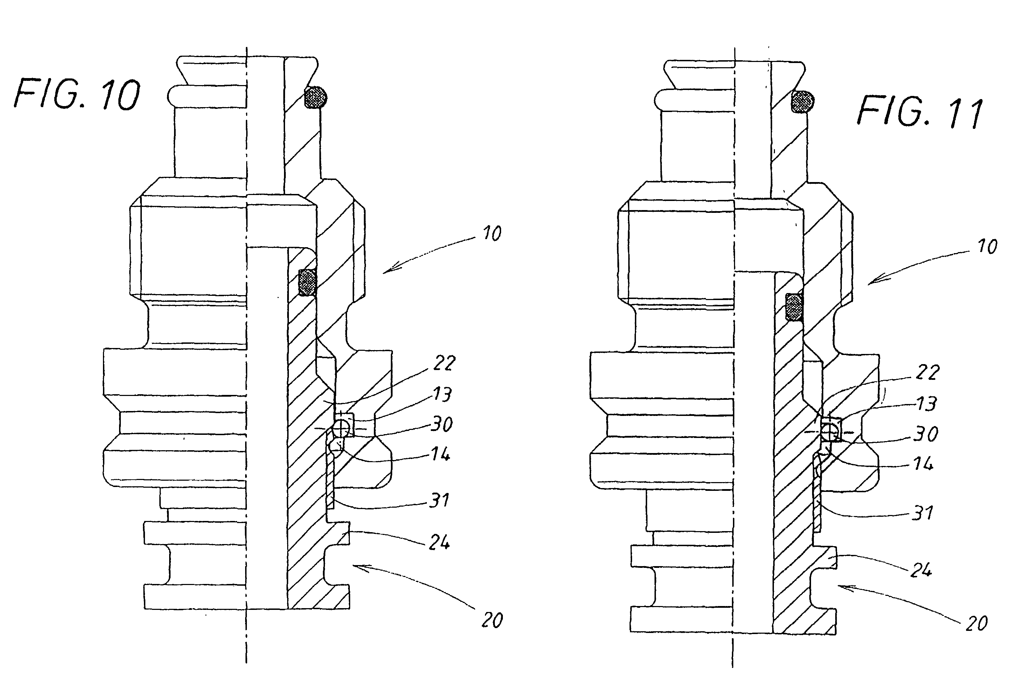

Das Lösen der Verbindung, das vorzugsweise bei druckfreien Leitungen erfolgt, wird durch ein erneutes Einschieben der Patrize 20 in die Matrize 10 eingeleitet. Figur 6 zeigt diese erste Phase des Lösevorganges. Der axial bewegliche Ring 31, der am Anschlagflansch 24 wiedergelagert ist, überführt den Sprengring 30 von der Sperrkammer 14 erneut in die Ausweichkammer 13 und zwar zunächst bis zum Anschlag an deren vorderer Abschlußkante. Durch tieferes Einführen der Patrize 20 in die Matrize 10 wird, wie in Figur 7 gezeigt, der Sprengring 30 über die Anlaufschräge 312 des axial beweglichen Rings 31 gespreizt, wobei die Ausweichkammer 13 hierfür ausreichend Raum bietet. Noch weiteres Einführen der Patrize 20 in die Matrize 10 läßt den Sprengring 30 in die Nut 311 des axial beweglichen Rings 31 gleiten. Günstigerweise entspricht diese Stellung auch dem tiefsten Einführungspunkt der Patrize 20 in die Matrize 10. Im gezeigten Ausführungsbeispiel wird ein weiteres Einführen durch den Anschlag der vorderen Spreizflanke 221 an die Übergangsflanke 111 verhindert. Im gezeigten Ausführungsbeispiel ist diese weitere Einführbewegung weiter durch den Anschlag des Anschlagflansches 24 an der Matrize 10 begrenzt. Beim folgenden Ausführvorgang der Patrize 20 aus der Matrize 10, der in Figur 9 dargestellt ist, erfährt der Sprengring 30, der von der Nut 311 hintergriffen mitgeführt wird, einen Anschlag an der hinteren Abschlußkante der Ausweichkammer 13. Hierdurch wird der in seiner Nut 311 vom Sprengring 30 umfaßte axial bewegliche Ring 31 nach vorn bis zur hinteren Spreizflanke 223 verschoben. Mit seiner Vorderkante, die vorzugsweise in ihrem Steigungswinkel mit dem der hinteren Spreizflanke 223 korrespondiert, bildet der axial bewegliche Ring 31 nun eine faktische Verlängerung des Spreizplateaus 222. Dies ist in Figur 10 zu erkennen. Der bereits vorgespreizte Sprengring 30, der durch diese Vorspreizung an einem Übergang in die Sperrkammer 14 gehindert wurde (und statt dessen an der hinteren Abschlußkante der Ausweichkammer 13 zum Anschlag kam), wird nun durch Auflaufen auf das Spreizplateau 222 vollständig gedehnt, wozu die Ausweichkammer 13 hinreichend Raum bietet. Ein vollständiges Ausführen der Patrize 20 aus der Matrize 10 ist nun ohne weiteres möglich.

Vor einem erneuten Kopplungsvorgang muß lediglich der axial bewegliche Ring 31 wieder in seine Ausgangsstellung, nämlich in Kontakt mit dem Anschlagflansch 24, gebracht werden.

Es sei ausdrücklich darauf hingewiesen, daß die in den Figuren und der speziellen Beschreibung dargelegten Ausführungsbeispiele lediglich spezielle Ausgestaltungen der erfindungsgemäßen Verbindervorrichtung darstellen, die den Schutzbereich in keiner Weise einschränken sollen. Vielmehr sind eine Reihe von weiteren Ausführungsformen denkbar. Insbesondere lassen sich die Rollen von Matrize und Patrize als Fest- oder Loshälfte beliebig austauschen. Auch vollständig freie Gegenstücke sind denkbar.

### Bezugszeichenliste:

- 10: Matrize
- 11: zylindrische Vorkammer
- 111: Übergangsflanke
- 12: Hauptkammer
- 13: Ausweichkammer
- 14: Sperrkammer
- 15: Außengewinde
- 16: Sechskantkragen
- 20: Patrize
- 21: vorderer, zylindrischer Teil
- 22: Spreizkragen
- 221: vordere Spreizflanke
- 222: Spreizplateau
- 223: hintere Spreizflanke
- 23: hinterer, zylindrischer Teil
- 24: Anschlagflansch
- 25: O-Ring
- 26: Nut
- 30: Sprengring
- 31: axial beweglicher Ring
- 311: Nut
- 312: Anlaufschräge

## Patentansprüche

1. Hochdruck-Verbindervorrichtung, insbesondere für die schnelle Kupplung von Hydraulikelementen, bestehend aus einer Patrize (20) und einer Matrize (10) als Verbindungselementen,
wobei die Matrize (10) eine Hauptkammer (12) zur Aufnahme der Patrize (20) aufweist und die Hauptkammer (12) mindestens eine Ausweichkammer (13) und eine Sperrkammer (14) für ein Sperrelement (30) aufweist, wobei die Sperrkammer (14) gegenüber der Ausweichkammer (13) eine geringere Tiefe aufweist
und wobei die Patrize (20) einen Spreizkragen (22), einen Anschlagflansch (24) und ein axial verschiebliches Element (31) aufweist, wobei der Außendurchmesser des verschieblichen Elements (31) dem Außendurchmesser des Spreizkragens (22) entspricht
und wobei ein Verbinden der beiden Verbindungselemente (10, 20) durch axiales Einführen der Patrize (20) in die Matrize (10) erfolgt, wobei nach hinreichend tiefem Einführen ein Sperrmechanismus von einer Löse- in eine Sperrstellung überführt wird
und wobei ein Lösen der Verbindung zunächst durch weiteres Einführen der Patrize (20) in die Matrize (10) erfolgt, wobei vermittels des axial verschieblichen Elementes (31) der Sperrmechanismus wenigstens zeitweise in seiner Lösestellung festlegbar und ein axiales Ausführen der Patrize (20) aus der Matrize (10) möglich ist,
**dadurch gekennzeichnet, daß**
die Sperrkammer (14) einen lichten Durchmesser aufweist, der kleiner ist als der Durchmesser des Spreizkragens (22) im Bereich eines Spreizplateaus (222) zuzüglich der doppelten Wandstärke des Sprengrings (30) und größer als der Durchmesser des zylindrischen Bereiches (23) der Patrize (20) zwischen dem Anschlagflansch (24) und dem Spreizkragen (22) zuzüglich der doppelten Wandstärke des Sprengrings (30) und
das Sperrelement (30) beim Löse- und/oder Kupplungsvorgang von einer Nut (311) des axial verschieblichen Elementes (31) hintergriffen wird.

2. Verbindervorrichtung nach Anspruch 1, **dadurch gekennzeichnet, daß** das axial verschiebliche Element ein axial beweglicher Ring (31) ist.

3. Verbindervorrichtung nach Anspruch 2, **dadurch gekennzeichnet, daß** der axial beweglicher Ring (31) an seinem dem Spreizkragen (22) zugewandten Rand eine Anlaufschräge (312) aufweist.

4. Verbindervorrichtung nach wenigstens einem der Ansprüche 1 bis 3, **dadurch gekennzeichnet, daß** der dem Spreizkragen (22) zugewandte Rand des axial beweglichen Rings (31) formschlüssig an die hintere Spreizflanke (223) des Spreizkragens (22) anlagerbar ist.

5. Verbindervorrichtung nach wenigstens einem der Ansprüche 1 bis 4, **dadurch gekennzeichnet, daß** das Sperrelement (30) ein Sprengring ist.

6. Verbindervorrichtung nach Anspruch 5, **dadurch gekennzeichnet, daß** der Sprengring (30) von der Nut (311) des axial beweglichen Rings (31) formschlüssig hintergreifbar ist.

7. Verbindervorrichtung nach wenigstens einem der Ansprüche 1 bis 6 **dadurch gekennzeichnet, daß** die Matrize (10) vor der Haupt-(12) eine Vorkammer (11) aufweist, in die der vor dem Spreizkragen (22) gelegene, zylindrische Teil (21) der Patrize (20) einführbar ist.

8. Verbindervorrichtung nach wenigstens einem der Ansprüche 1 bis 7 **dadurch gekennzeichnet, daß** der Außendurchmesser des Sprengrings (30) in entspanntem Zustand größer ist als der lichte Durchmesser der Hauptkammer (13) und kleiner als der lichte Durchmesser der Sperrkammer (14).

9. Verbindervorrichtung nach wenigstens einem der Ansprüche 1 bis 8 **dadurch gekennzeichnet, daß** der maximale Außendurchmesser des axial beweglichen Rings (31) in etwa dem maximalen Außendurchmesser des Spreizkragens (22) sowie dem lichten Durchmesser der Hauptkammer (12) entspricht.

10. Verbindervorrichtung nach wenigstens einem der Ansprüche 1 bis 9 **dadurch gekennzeichnet, daß** der minimale Innendurchmesser des axial beweglichen Rings (31) in etwa dem Durchmesser des zylindrischen Bereiches (23) der Patrize (20) zwischen Anschlagflansch (24) und Spreizkragen (22) entspricht.

11. Verbindervorrichtung nach wenigstens einem der Ansprüche 1 bis 10 **dadurch gekennzeichnet, daß** die Ausweichkammer (13) einen lichten Durchmesser aufweist, der größer als der Durchmesser des Spreizkragens (22) im Bereich des Spreizplateaus (222) zzgl. der doppelten Wandstärke des Sprengrings (30) ist.

12. Verbindervorrichtung nach wenigstens einem der Ansprüche 1 bis 11 **dadurch gekennzeichnet, daß** in dem vor dem Spreizkragen (22) gelegenen, zylindrischen Teil (21) der Patrize (20) eine Dichtungsnut (26) zur Aufnahme eines Dichtungsmittels (25) vorgesehen ist.

13. Verbindervorrichtung nach wenigstens einem der Ansprüche 1 bis 12 **dadurch gekennzeichnet, daß** in der Vorkammer der Matrize (10) eine Dichtungsnut zur Aufnahme eines Dichtungsmittles vorgesehen ist.

14. Verbindervorrichtung nach wenigstens einem der Ansprüche 1 bis 13, **dadurch gekennzeichnet, daß** die Matrize (10) an ihrem der Kupplungsstelle abgewandten Teil ein Außengewinde (15) aufweist.

15. Verbindervorrichtung nach wenigstens einem der Ansprüche 1 bis 14, **dadurch gekennzeichnet, daß** die Matrize (10) zwischen ihrem der Kupplungsstelle abgewandten und ihrem der Kupplungsstelle zugewandten Teil einen Sechskant-Kragen (16) aufweist.

16. Verbindervorrichtung nach wenigstens einem der Ansprüche 1 bis 15, **dadurch gekennzeichnet, daß** die Patrize (20) an ihrem der Kupplungsstelle abgewandten Teil ein Außengewinde aufweist.

17. Verbindervorrichtung nach wenigstens einem der Ansprüche 1 bis 16, **dadurch gekennzeichnet, daß** die Patrize (20) zwischen ihrem der Kupplungsstelle abgewandten und ihrem der Kupplungsstelle zugewandten Teil einen Sechskant-Kragen aufweist.

## Claims

1. High-pressure connector apparatus, in particular for the rapid coupling of hydraulic elements, comprising a male piece (20) and a female piece (10) as connecting elements,
wherein the female piece (10) comprises a main chamber (12) for receiving the male piece (20) and the main chamber (12) comprises at least one deflection chamber (13) and a locking chamber (14) for a locking element (30), wherein the locking chamber (14) has a lower depth than the deflection chamber (13),
and wherein the male piece (20) comprises an expansion collar (22), a stop flange (24) and an axially displaceable element (31), wherein the outside diameter of the displaceable element (31) corresponds to the outside diameter of the expansion collar (22)
and wherein connecting of the two connecting elements (10, 20) is effected by axially introducing the male piece (20) into the female piece (10), wherein after sufficiently deep introduction a locking mechanism is transferred from a release position into a locking position
and wherein release of the connection is effected firstly by introducing the male piece (20) further into the female piece (10), wherein by means of the axially displaceable element (31) the locking mechanism is at least temporarily fixable in its release position and axial withdrawal of the male piece (20) from the female piece (10) is possible,
**characterized in that**
the locking chamber (14) has an inside diameter, which is smaller than the diameter of the expansion collar (22) in the region of an expansion plateau (222) plus twice the wall thickness of the snap ring (30) and greater than the diameter of the cylindrical region (23) of the male piece (20) between the stop flange (24) and the expansion collar (22) plus twice the wall thickness of the snap ring (30) and
during the release and/or coupling operation a groove (311) of the axially displaceable element (31) engages behind the locking element (30).

2. Connector apparatus according to claim 1, **characterized in that** the axially displaceable element is an axially movable ring (31).

3. Connector apparatus according to claim 2, **characterized in that** the axially movable ring (31) at its edge facing the expansion collar (22) has an abutment bevel (312).

4. Connector apparatus according to at least one of claims 1 to 3, **characterized in that** the edge of the axially movable ring (31) facing the expansion collar (22) is positionable positively against the rear expansion flank (223) of the expansion collar (22).

5. Connector apparatus according to at least one of claims 1 to 4, **characterized in that** the locking element (30) is a snap ring.

6. Connector apparatus according to claim 5, **characterized in that** the groove (311) of the axially movable ring (31) is engageable positively behind the snap ring (30).

7. Connector apparatus according to at least one of claims 1 to 6, **characterized in that** the female piece (10) in front of the main chamber (12) has an antechamber (11), into which the cylindrical part (21) of the male piece (20) situated in front of the expansion collar (22) is introducible.

8. Connector apparatus according to at least one of claims 1 to 7, **characterized in that** the outside diameter of the snap ring (30) in the relaxed state is greater than the inside diameter of the main chamber (13) and smaller than the inside diameter of the locking chamber (14).

9. Connector apparatus according to at least one of claims 1 to 8, **characterized in that** the maximum outside diameter of the axially movable ring (31) corresponds approximately to the maximum outside diameter of the expansion collar (22) as well as the inside diameter of the main chamber (12).

10. Connector apparatus according to at least one of claims 1 to 9, **characterized in that** the minimum inside diameter of the axially movable ring (31) corresponds approximately to the diameter of the cylindrical region (23) of the male piece (20) between stop flange (24) and expansion collar (22).

11. Connector apparatus according to at least one of claims 1 to 10, **characterized in that** the deflection chamber (13) has an inside diameter, which is greater than the diameter of the expansion collar (22) in the region of the expansion plateau (222) plus twice the wall thickness of the snap ring (30).

12. Connector apparatus according to at least one of claims 1 to 11, **characterized in that** a sealing groove (26) for receiving a sealing means (25) is provided in the cylindrical part (21) of the male part (20) situated in front of the expansion collar (22).

13. Connector apparatus according to at least one of claims 1 to 12, **characterized in that** a sealing groove for receiving a sealing means is provided in the antechamber of the female piece (10).

14. Connector apparatus according to at least one of claims 1 to 13, **characterized in that** the female piece (10) at its part remote from the coupling point has an external thread (15).

15. Connector apparatus according to at least one of claims 1 to 14, **characterized in that** the female piece (10) between its part remote from the coupling point and its part facing the coupling point has a hexagonal collar (16).

16. Connector apparatus according to at least one of claims 1 to 15, **characterized in that** the male piece (20) at its part remote from the coupling point has an external thread.

17. Connector apparatus according to at least one of claims 1 to 16, **characterized in that** the male piece (20) between its part remote from the coupling point and its part facing the coupling part has a hexagonal collar.

## Revendications

1. Connecteur pour haute pression, en particulier pour le raccordement rapide d'éléments hydrauliques, constitué d'une partie mâle (20) et d'une partie femelle (10) en tant qu'éléments de liaison,
la partie femelle (10) présentant une chambre principale (12) pour recevoir la partie mâle (20) et la chambre principale (12) présentant au moins une chambre d'échappement (13) et une chambre de barrage (14) pour un élément de barrage (30), la chambre de barrage (14) présentant une plus faible profondeur que la chambre d'échappement (13),
et la partie mâle (20) présentant une collerette d'écartement (22), une bride formant butée (24) et un élément (31) mobile axialement, le diamètre extérieur de l'élément mobile (31) correspondant au diamètre extérieur de la collerette d'écartement (22),
et une liaison entre les deux éléments de liaison (10, 20) étant obtenue par insertion axiale de l'élément mâle (20) dans l'élément femelle (10), sachant que, après insertion à une profondeur suffisante, un mécanisme de blocage passe d'une position de désolidarisation à une position de blocage,
et où une désolidarisation de la liaison s'effectue d'abord par insertion d'une distance supplémentaire de l'élément mâle (20) dans l'élément femelle (10), sachant que, au moyen de l'élément (31) mobile axialement, le mécanisme de blocage est susceptible d'être bloqué par moment à sa position de désolidarisation et une sortie de l'élément mâle (20) hors de l'élément femelle (10) étant possible,
**caractérisé en ce que**
la chambre de blocage (14) présente un diamètre libre inférieur au diamètre de la collerette d'écartement (22) dans la zone d'un plateau d'écartement (222), plus le double de l'épaisseur de la paroi du jonc (30), et supérieur au diamètre de la zone cylindrique (23) de l'élément mâle (20) entre la bride formant butée (24) et la collerette d'écartement (22), plus le double de l'épaisseur de paroi du jonc (30), et
l'élément de blocage (30) est saisi par l'arrière, lors du processus de désolidarisation et/ou d'accouplement, par une gorge (311) de l'élément (31) mobile axialement.

2. Connecteur selon la revendication 1, **caractérisé en ce que** l'élément mobile axialement est une bague (31) mobile axialement.

3. Connecteur selon la revendication 2, **caractérisé en ce que** la bague (31) mobile axialement présente une pente de franchissement (312) sur son bord tourné vers la collerette d'écartement (22).

4. Connecteur selon au moins l'une des revendications 1 à 3, **caractérisé en ce que** le bord, tourné vers la collerette d'écartement (22), de la bague (31) mobile axialement est susceptible d'être plaqué avec liaison par ajustement de forme sur le flanc d'écartement arrière (223) de la collerette d'écartement (22).

5. Connecteur selon au moins l'une des revendications 1 à 4, **caractérisé en ce que** l'élément de blocage (30) est un jonc.

6. Connecteur selon la revendication 5, **caractérisé en ce que** le jonc (30) est susceptible d'être saisi par l'arrière avec liaison par ajustement de forme, par la gorge (311) de la bague (31) mobile axialement.

7. Connecteur selon au moins l'une des revendications 1 à 6, **caractérisé en ce que** la partie femelle (10) présente, devant la chambre principale (12), une préchambre (11) dans laquelle peut être introduite la partie (21) cylindrique, placée devant la collerette d'écartement (22), de la partie mâle (20).

8. Connecteur selon au moins l'une des revendications 1 à 7, **caractérisé en ce que** le diamètre extérieur du jonc (30) à l'état détendu est supérieur au diamètre libre de la chambre principale (13) et inférieur au diamètre libre de la chambre de blocage (14).

9. Connecteur selon au moins l'une des revendications 1 à 8, **caractérisé en ce que** le diamètre extérieur maximal de la bague (31) mobile axialement correspond à peu près au diamètre extérieur maximal de la collerette d'écartement (22) ainsi qu'au diamètre libre de la chambre principale (12).

10. Connecteur selon au moins l'une des revendications 1 à 9, **caractérisé en ce que** le diamètre intérieur minimal de la bague (31) mobile axialement correspond à peu près au diamètre de la zone cylindrique (23) de la partie mâle (20) entre la bride formant butée (24) et la collerette d'écartement (22).

11. Connecteur selon au moins l'une des revendications 1 à 10, **caractérisé en ce que** la chambre d'échappement (13) présente un diamètre libre supérieur au diamètre de la collerette d'écartement (22) dans la zone du plateau d'écartement (222), plus le double de l'épaisseur de paroi du jonc (30).

12. Connecteur selon au moins l'une des revendications 1 à 11, **caractérisé en ce qu'**une gorge d'étanchéité (26) devant recevoir un moyen d'étanchéité (25) est prévue dans la partie cylindrique (21) de l'élément mâle (20), placée devant la collerette d'écartement (22).

13. Connecteur selon au moins l'une des revendications 1 à 12, **caractérisé en ce qu'**une gorge d'étanchéité est prévue pour recevoir un moyen d'étanchéité, dans la préchambre de la partie femelle (10).

14. Connecteur selon au moins l'une des revendications 1 à 13, **caractérisé en ce que** la partie femelle (10) présente un filetage extérieur (15) sur sa partie opposée au point d'accouplement.

15. Connecteur selon au moins l'une des revendications 1 à 14, **caractérisé en ce que** la partie femelle (10) présente une collerette à six pans (16) entre sa partie opposée au point d'accouplement et sa partie tournée vers le point d'accouplement.

16. Connecteur selon au moins l'une des revendications 1 à 15, **caractérisé en ce que** la partie mâle (20) présente un filetage extérieur sur sa partie opposée au point d'accouplement.

17. Connecteur selon au moins l'une des revendications 1 à 16, **caractérisé en ce que** la partie mâle (20) présente une collerette à six pans entre sa partie opposée au point d'accouplement et sa partie tournée vers le point d'accouplement.
